# FASCICULE DE BREVET EUROPEEN

(11) **EP 2 603 785 B1**
(45) Date de publication et mention de la délivrance du brevet: **27.05.2015**
(21) Numéro de dépôt: 11760566.7
(22) Date de dépôt: 12.08.2011
(51) Int. Cl.: G01N 3/04

(54) **CELLULE A ENCLUMES DE DIAMANT SUSCEPTIBLE DE FONCTIONNER EN MODE DYNAMIQUE**
DIAMANTSTEMPELZELLE FÜR DEN BETRIEB IM DYNAMISCHEN MODUS
DIAMOND ANVIL CELL CAPABLE OF OPERATING IN DYNAMIC MODE

(30) Priorité: 13.08.2010 FR 1003368
(43) Date de publication de la demande: 19.06.2013
(73) Titulaire: Centre National de la Recherche Scientifique, 75016 Paris (FR); Université Pierre et Marie Curie (Paris 6), 75005 Paris (FR); Synchrotron Soleil, 91192 Gif-sur-Yvette Cedex (FR)
(72) Inventeur: BUREAU, Hélène, F-91220 Bretigny-sur-Orge (FR); KUBSKY, Stefan, 91400 Orsay (FR)
(74) Mandataire: Reboussin, Yohann Mickaël Noël
(86) Numéro de dépôt international: PCT/IB2011/053594
(87) Numéro de publication internationale: WO 2012/020390

(56) Documents cités:
- EP-A1- 0 458 672
- EP-A2- 0 766 084
- EP-B1- 0 574 520
- EVANS WILLIAM ET AL: "Dynamic diamond anvil cell (dDAC): A novel device for studying the dynamic-pressure properties of materials", REVIEW OF SCIENTIFIC INSTRUMENTS, AIP, MELVILLE, NY, US, vol. 78, no. 7, 5 juillet 2007 (2007-07-05), pages 73904-73904, XP012104093, ISSN: 0034-6748, DOI: DOI:10.1063/1.2751409 cité dans la demande

## Description

La présente invention se rapporte au domaine des cellules à enclumes.

La présente invention se rapporte plus particulièrement au domaine des cellules à enclumes susceptibles de fonctionner en mode dynamique. Par mode dynamique, il faut comprendre que la pression appliquée entre les enclumes est susceptible d'évoluer dans le temps pendant son utilisation.

Les cellules à enclumes sont notamment utilisées pour la réalisation d'expériences visant à étudier les matériaux sous conditions extrêmes. Il s'agit de dispositifs permettant de comprimer un échantillon dont on cherche à déterminer les propriétés sous pression, par application d'une pression entre deux enclumes disposées en vis-à-vis. Ces pressions peuvent être comprises entre la pression ambiante et quelques centaines de GPa (gigapascal). L'application de hautes pressions s'accompagne généralement de hautes températures, pouvant atteindre 6000K environ.

Le diamant est généralement utilisé comme enclume car il résiste à ces hautes pressions et parce qu'il est transparent. D'autres matériaux sont utilisés pour former les enclumes. C'est par exemple le cas des enclumes de Bridgman, réalisées en carbure de tungstène ou encore des enclumes réalisées avec de la moissanite.

Il existe différents types de cellules à enclumes. Elles peuvent par exemple se distinguer les unes des autres par les moyens employés pour générer la pression entre les enclumes ou par les moyens pour générer la température.

Seuls certains types de cellules permettent en revanche un fonctionnement en mode dynamique.

Pour certaines applications, il est en effet intéressant de pouvoir faire évoluer dynamiquement la pression appliquée entre les enclumes.

Un fonctionnement en mode dynamique est par exemple envisageable avec la cellule proposée dans le document « Dynamic diamond anvil cell (dDAC) : A novel device for studying the dynamic-pressure properties of materials », William J. Evans & al., Review of Scientific Instruments, 78, 073904, 2007 (ci-après noté D1).

La cellule proposée dans ce document comporte des vis de réglage auxquelles sont associés, en parallèle, plusieurs actionneurs piézoélectriques.

Les vis permettent d'appliquer une pression statique de valeur maximale entre les enclumes, en rapprochant les enclumes l'une de l'autre.

Les actionneurs piézoélectriques permettent quant à eux de faire évoluer dynamiquement la pression appliquée entre les enclumes, en écartant les enclumes l'une de l'autre.

Ainsi, les actionneurs piézoélectriques agissent en contre-réaction par rapport à l'action des vis, permettant ainsi d'écarter de manière dynamique et contrôlée la platine du corps et donc une enclume de l'autre enclume.

Plus précisément, les vis relient le corps de la cellule dans laquelle est montée une première enclume à une platine mobile sur une face de laquelle est montée la deuxième enclume, en regard de la première enclume. Par ailleurs, les actionneurs piézoélectriques sont également montés entre le corps de la cellule et la face de la platine mobile portant la deuxième enclume.

De ce fait, les actionneurs piézoélectriques diminuent dynamiquement la pression appliquée par les vis entre les enclumes, en l'occurrence en diamants. On comprend ainsi que la pression maximale susceptible d'être appliquée entre les enclumes de diamants est celle qui est appliquée par les vis. Afin de permettre le déplacement de la platine mobile par les actionneurs piézoélectriques, les vis sont montées sur des rondelles de Belleville.

Il n'est donc pas possible d'augmenter dynamiquement la pression au-delà de la pression statique imposée par les vis, mais seulement de la diminuer dynamiquement.

Cette cellule n'est donc pas polyvalente.

En outre, on place classiquement un joint plastiquement déformable entre les enclumes, ce joint permettant d'enfermer l'échantillon hermétiquement entre les enclumes. Or, en appliquant une pression maximale en premier lieu, puis, en diminuant cette pression, l'étanchéité du joint peut être compromise et les conditions expérimentales modifiées de manière aléatoire et non contrôlée. Avec la cellule à enclumes divulguée dans ce document, la pression demandée ne correspond pas à la pression réellement appliquée entre les enclumes.

En effet, certaines parties de la cellule, en particulier métalliques, sont amenées à se déformer. Cette déformation modifie l'alignement des enclumes et par suite, la pression réellement exercée entre les enclumes.

De plus, lorsque les actionneurs piézoélectriques modifient dynamiquement la pression appliquée entre les enclumes, la platine présente généralement un comportement hystérésis, qui est susceptible d'accentuer l'écart entre la pression demandée et la pression réellement appliquée entre les enclumes de diamants.

En outre, si les vis ne sont pas serrées de manière parfaitement identique, il existe un risque de désalignement des enclumes.

Les phénomènes d'hystérésis peuvent également participer au désalignement des enclumes.

Or, le désalignement des enclumes peut provoquer leur endommagement, et même conduire à leur rupture, compte tenu des hautes pressions générées par ces cellules.

Cette rupture peut advenir en fonctionnement, que la pression soit constante ou évolue dans le temps.

Cette rupture peut également advenir lors de la préparation d'un essai, lorsque l'on rapproche les enclumes l'une de l'autre (phase de compression).

Cette rupture peut encore advenir à l'issue d'un essai, lorsque l'on écarte les enclumes l'une de l'autre (phase de décompression).

Un objectif de l'invention est de proposer une cellule à enclumes, par exemple avec des enclumes de diamants, permettant d'éviter l'un au moins des inconvénients mentionnés ci-dessus.

En particulier, un objectif de l'invention est de proposer une cellule à enclumes, par exemple à enclumes de diamants, permettant de contrôler avec précision la pression réellement appliquée entre les enclumes, notamment en mode dynamique.

Plus particulièrement, un objectif de l'invention est de limiter, voire de contrebalancer, les effets d'hystérésis rencontrés dans les cellules existantes.

Plus particulièrement également, un objectif de l'invention est de limiter, voire d'éviter tout désalignement entre les enclumes.

Un autre objectif de l'invention est de proposer une cellule plus polyvalente, permettant notamment de faire évoluer la pression à la hausse et/ou à la baisse, en mode dynamique, sans être bloqué par un niveau de pression maximum imposé par une vis de réglage.

Un autre objectif est de proposer une cellule permettant une mise sous pression rapide des enclumes, de façon homogène.

Un autre objectif de l'invention est d'assurer une meilleure étanchéité du joint placé entre les enclumes.

Pour atteindre l'un au moins de ces objectifs, l'invention propose une cellule à enclumes comprenant :
- un support fixe en utilisation;
- une platine mobile ;
- au moins un actionneur piézoélectrique présentant un axe d'actionnement, dont une extrémité est solidaire du support et dont l'autre extrémité est solidaire d'une première face de la platine mobile, ladite platine étant susceptible de se déplacer selon l'axe d'actionnement de l'actionneur sous l'action de ce dernier ;
- une première enclume montée sur une deuxième face de ladite platine, opposée à la première face ; et
- une deuxième enclume, solidaire du support, montée en vis-à-vis de la première enclume.

La cellule pourra prévoir d'autres caractéristiques techniques, prises seules ou en combinaison:
- le support fixe en utilisation peut comprendre au moins deux platines fixes, maintenues à distance l'une de l'autre;
- la platine mobile peut être montée coulissante entre les platines fixes ;
- les actionneurs piézoélectriques peuvent être montés sur une première platine fixe et sur la platine mobile ;
- les enclumes peuvent être montées en regard l'une de l'autre, entre la platine (30) mobile et la deuxième platine fixe ;
- il peut être prévu un capteur de force, monté entre le ou chaque actionneur piézoélectrique et le support ;
- au moins l'un des actionneurs piézoélectriques peut comprendre un capteur d'élongation ;
- il peut être prévu plusieurs actionneurs piézoélectriques, chaque actionneur comprenant une extrémité solidaire du support et une autre extrémité solidaire d'une face de ladite platine mobile ;
- les enclumes peuvent présenter un axe d'alignement, les actionneurs piézoélectriques étant répartis uniformément autour de cet axe d'alignement ; et/ou
- au moins l'une des enclumes peut comprendre l'un au moins des éléments suivants : capteur de pression, capteur de température, électrodes de mesure, moyen de chauffage tel qu'un four résistif.

L'invention se rapporte également à un dispositif comprenant une cellule à enclumes précédente et des moyens pour contrôler la pression appliquée par le ou chaque actionneur piézoélectrique, à partir des données au moins issues du ou de chaque capteur de force.

Avantageusement, les moyens pour contrôler la pression appliquée par le ou chaque actionneur piézoélectrique utilisent, en outre, les données issues du ou de chaque capteur d'élongation.

Également avantageusement, les moyens pour contrôler la pression appliquée par le ou chaque actionneur comprennent un régulateur de type Proportionnel Intégral Dérivé.

D'autres caractéristiques, buts et avantages de l'invention seront énoncés dans la description détaillée ci-après faite en référence aux figures suivantes :
- la figure 1 est un schéma, selon une vue en coupe, d'une cellule à enclumes conforme à l'invention;
- la figure 2 est un schéma de principe d'un moyen de régulation de la pression appliquée entre les enclumes de la cellule représentée sur la figure 1.

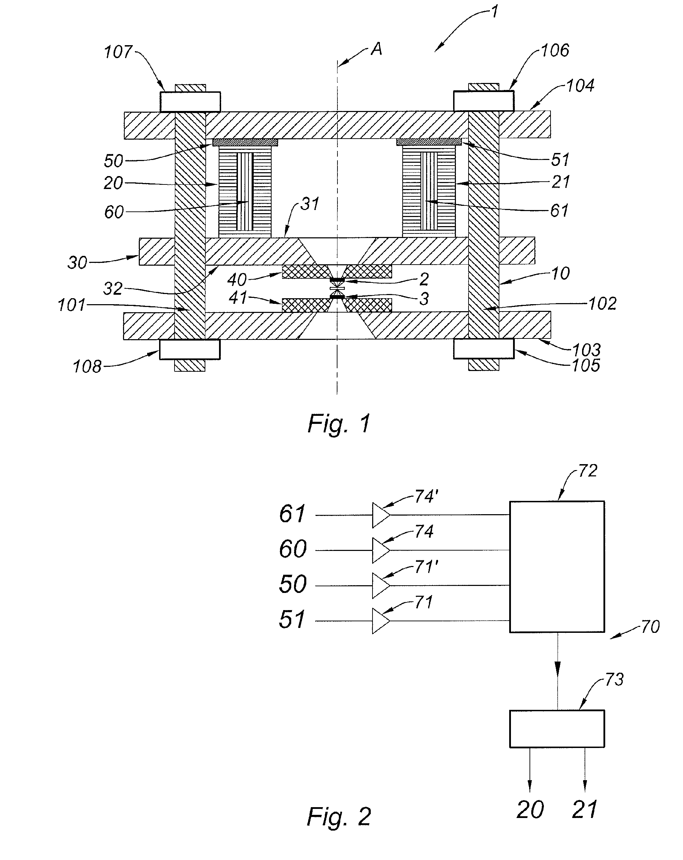

La cellule 1 à enclumes selon l'invention est décrite à l'appui de la figure 1 annexée. Cette figure présente un mode de réalisation particulier de l'invention dans lequel plusieurs actionneurs piézoélectriques sont prévus.

Les enclumes 2, 3 sont en l'occurrence en diamants, mais d'autres matériaux comme le carbure de tungstène pourraient être utilisés. En effet, dans la mesure où l'invention permet de réguler précisément la pression exercée entre les enclumes, des matériaux plus ou moins durs que le diamant peuvent être utilisés (par exemple le carbure de bore).

La cellule 1 comprend un support 10 qui est dans le cas d'espèce constituée de plusieurs parties assemblées. Plus précisément, le support 10 comprend des montants verticaux 101, 102, fixes, et des platines horizontales 103, 104, également fixes, ces montants et platines étant maintenus ensemble, en position d'utilisation, par des moyens adaptés, par exemple par des moyens de maintien 105, 106, 107, 108 de type écrou. On entend par « fixe » le fait que, en utilisation, la position relative des platines 103, 104 ne change pas. Cela ne signifie pas pour autant que les platines 103, 104 ne soient pas démontables.

Elle comprend également un ou plusieurs actionneurs piézoélectriques Un actionneur piézoélectrique susceptible de convenir peut être choisi parmi les séries P 225.xx ou P235.xx de la société « Physikalische Instrumente ».

Sur la figure 1 annexée, plusieurs actionneurs piézoélectriques 20, 21 sont représentés.

Une extrémité de chaque actionneur piézoélectrique 20, 21 est solidaire du support 10 et plus précisément de la platine horizontale fixe supérieure 104 du support 10. L'autre extrémité de chaque actionneur piézoélectrique 20, 21 est par ailleurs solidaire d'une face 31 d'une platine mobile 30 qui est susceptible de se déplacer, en utilisation, selon l'axe d'actionnement des actionneurs sous l'action de ces derniers.

L'axe d'actionnement d'un actionneur piézoélectrique correspond à la direction de l'effort qu'il est destiné à transmettre à la platine mobile 30. L'axe d'actionnement de chacun des actionneurs piézoélectriques 20, 21 est parallèle à l'axe A d'alignement des enclumes 2, 3.

Une première enclume 2 est montée sur l'autre face 32 de la platine 30 mobile, de préférence par l'intermédiaire d'une première plaque 40.

Les actionneurs piézoélectriques 20, 21 d'une part, et la première enclume 2 d'autre part, sont ainsi disposés de part et d'autre de la platine 30 mobile.

La deuxième enclume 3, montée en vis-à-vis de la première enclume 2, est solidaire du support 10 et plus précisément solidaire de la platine fixe 103 horizontale inférieure du support 10. Le montage de la deuxième enclume 3 sur la platine fixe 103 horizontale inférieure du support 10 s'effectue de préférence par l'intermédiaire d'une deuxième plaque 41.

Lorsqu'elles sont prévues, les première 40 et deuxième 41 plaques permettent de réaliser les platines 30 et 103 en un matériau facilement usinable donc, en général, relativement mou pour les pressions de serrage utilisées dans une cellule. Un tel matériau est par exemple de l'acier inoxydable ou un alliage traité par exemple de type pyrad. Sans les plaques 40 et 41, les diamants s'enfonceraient dans les platines 30 et 103. On utilise donc des plaques d'une dureté intermédiaire entre le matériau utilisé pour les enclumes (le diamant de préférence) et le matériau utilisé pour les platines 30 et 103 (l'inox de préférence). Les plaques 40 et 41 sont par exemple en carbure de tungstène. Ce matériau étant difficilement usinable et très coûteux, il est réservé pour les plaques 40 et 41 qui présentent de petites dimensions. Les plaques 40 et 41 permettent donc, en utilisation, de distribuer la force aux enclumes sans que celles-ci ne déforment les platines 30 et 103 et d'assurer la tenue mécanique latérale des enclumes.

La cellule 1 peut avantageusement comprendre des capteurs de force 50, 51 et des capteurs d'élongation 60, 61.

Un capteur de force 50, 51 est associé à chaque actionneur piézoélectrique 20, 21. Lorsque de tels capteurs sont prévus, un capteur de force est plus précisément disposé entre chaque actionneur piézoélectrique 20, 21 et la platine fixe 104 horizontale supérieure du support 10. Il s'agit de la configuration représentée sur la figure 1.

Un capteur d'élongation 60, 61 peut en outre être intégré dans chaque actionneur piézoélectrique 20, 21.

De plus, l'une au moins des enclumes 2, 3 peut comprendre l'un au moins des éléments suivants : capteur de pression, capteur de température, électrodes de mesure, moyen de chauffage tel qu'un four résistif (voir, pour ce dernier, l'article suivant : H. Bureau, M. Burchard, S. Kubsky, S. Henry, C. Gondé, A. Zaitsev, J. Meijer (2006) « Intelligent Anvils Applied to Experimental Investigations: State of the Art », High Pressure Research, 26-3, 251-265, dont le contenu est incorporé par référence).

Les actionneurs piézoélectriques 20, 21 sont préférentiellement répartis uniformément autour de l'axe d'alignement des enclumes. Cela permet de répartir plus uniformément l'effort appliqué par les actionneurs piézoélectriques 20, 21 sur la platine 30 mobile et donc de maintenir parfaitement alignées les enclumes entre elles.

Une telle répartition est notamment intéressante lorsque les actionneurs piézoélectriques 20, 21 sont identiques.

Seuls deux actionneurs piézoélectriques sont représentés sur la figure 1, mais un nombre plus important d'actionneurs piézoélectriques peut être envisagé.

Au contraire, on peut envisager un unique actionneur piézoélectrique dont la forme correspondrait à celle de la platine 30 mobile. Dans ce cas, l'actionneur piézoélectrique 20, 21 est en mesure de déplacer la platine 30 mobile en exerçant une pression uniforme sur celle-ci.

On peut également envisager l'utilisation d'un ou de plusieurs actionneur(s) piézoélectrique(s) présentant une forme complètement dédiée à la cellule envisagée. Les procédés de fabrication connus d'un actionneur piézoélectrique permettent en effet de fabriquer un actionneur sur mesure.

Seul(s) le ou les actionneur(s) piézoélectrique(s) permettent d'appliquer une pression entre les enclumes.

Les inconvénients décrits précédemment qui sont liés à l'utilisation de vis de réglage ne sont donc pas rencontrés avec la cellule selon l'invention. En effet, les moyens de maintien 105, 106, 107, 108 ne servent qu'à positionner les différentes parties du support 10, mais n'interviennent pas dans le serrage des enclumes.

La cellule selon l'invention est plus simple par conception que la cellule divulguée dans le document D1.

De ce fait, elle limite les problèmes d'hystérésis de certains matériaux, notamment grâce au nombre limité de pièces mises en oeuvre, ainsi que les problèmes de désalignement des enclumes.

La cellule selon l'invention est également plus polyvalente. En particulier, il est possible de faire évoluer la pression entre les enclumes, en mode dynamique, sans être bloqué sur la pression maximale susceptible d'être atteinte par la pression statique fournie par une vis de réglage.

L'utilisation d'actionneurs piézoélectriques permet, dans ces conditions, d'effectuer une mise sous pression rapide des enclumes, en limitant le désalignement entre les enclumes.

Par ailleurs, toujours par rapport à la cellule divulguée dans le document D1, la cellule selon l'invention limite les éventuels problèmes d'étanchéité du joint placé entre les enclumes.

Un autre avantage lié à la cellule selon l'invention est que la pression exercée par le ou les actionneurs piézoélectriques 20, 21 s'applique directement sur la platine 30 mobile, limitant ainsi les effets d'hystérésis.

Ceci est en particulier intéressant en comparaison aux cellules à enclumes fonctionnant avec une membrane à gaz déformable, de nature métallique.

Dans ces cellules à membranes, le contrôleur engendre une déformation de la membrane, qui implique le déplacement d'un piston selon l'axe longitudinal de la cellule. Le piston, solidaire d'une des enclumes, permet alors de faire évoluer la pression appliquée entre les enclumes.

Le contrôleur exerce une action dynamique, par exemple en envoyant un signal sinusoïdal sur la membrane, qui se transmet à l'une des enclumes par l'intermédiaire du piston.

Or, la membrane est généralement soumise à un phénomène d'hystérésis sous l'effet de la dynamique de la pression appliquée sur celle-ci. Ceci ne permet pas de connaître la pression réellement appliquée entre les enclumes. Le contrôleur maîtrise seulement la pression appliquée sur la membrane elle-même.

Ces phénomènes d'hystérésis peuvent être à l'origine d'un désalignement des enclumes.

Avec la cellule selon l'invention, on ne rencontre pas de fait les inconvénients décrits précédemment qui sont liés à l'utilisation d'une membrane déformable pour transmettre une pression vers les enclumes.

La cellule selon l'invention est donc par conception plus simple qu'une cellule à enclumes comportant une membrane déformable. Par rapport à la cellule à enclumes comportant une membrane déformable, elle limite les problèmes d'hystérésis de certains matériaux, pouvant être rencontrés en mode dynamique. Elle limite également les problèmes de désalignement des enclumes, lesquels sont susceptibles de conduire à la rupture des enclumes.

D'autres caractéristiques de la cellule selon l'invention sont présentées ci-après.

La cellule 1 est associée à des moyens de contrôle de la pression réellement appliquée par les actionneurs piézoélectriques 20, 21 sur la platine 30 mobile, ces moyens étant connectés à chacun des actionneurs piézoélectriques 20, 21.

Ces moyens de contrôle comprennent notamment un ou plusieurs générateur(s) de fonctions.

Un générateur de fonctions peut ainsi être prévu pour un ou plusieurs actionneur(s) piézoélectriques.

Avantageusement, un générateur de fonctions est relié à chaque actionneur piézoélectrique pour la gestion dynamique de l'actionneur. Le contrôle de chaque actionneur piézoélectrique peut ainsi s'effectuer d'une façon indépendante.

Le générateur de fonctions gère la nature des fonctions générées (sinusoïdales, carrées, etc.), ainsi que la fréquence de variation de ces fonctions. Ce générateur peut par exemple être le produit 33120A de la marque AGILENT.

Avantageusement, les capteurs de force 50, 51 et d'élongation 60, 61 permettent de contrôler plus précisément la pression réellement appliquée entre les enclumes et de contrebalancer un éventuel désalignement des enclumes.

A cet effet, les capteurs de force 50, 51 et d'élongation 60, 61 sont connectés aux moyens de contrôle mentionnés précédemment. A cet effet également, ces moyens de contrôle comprennent une boucle de régulation, en connexion avec les générateurs de fonctions.

Une boucle de régulation 70 susceptible d'être employée avec la cellule représentée sur la figure 1, est schématisée sur la figure 2.

Les signaux issus des capteurs 50, 51 de force et d'élongation 60, 61 sont généralement amplifiés dans un amplificateur 71, 71', 74, 74' avant d'être transmis à un régulateur 72.

Ce régulateur 72 est par exemple un régulateur PID (Proportionnel Intégral Dérivé) qui est largement répandu.

En sortie du régulateur 72, un autre amplificateur 73 peut être prévu avant que les générateurs de fonctions envoient le signal de commande vers les actionneurs piézoélectriques 20, 21.

La boucle de régulation 70 permet ainsi de prendre en compte les mesures, fournies par les capteurs de force 50, 51, de la force appliquée par les actionneurs piézoélectriques 20, 21 sur la platine 30 mobile, dans le signal de commande envoyé par les générateurs de fonctions aux actionneurs piézoélectriques. Cette boucle de régulation 70 permet également de prendre en compte les mesures, fournies par les capteurs d'élongation 60, 61, de l'élongation des actionneurs piézoélectriques 60, 61 dans le signal de commande envoyé par les générateurs de fonctions aux actionneurs piézoélectriques.

Connaissant par ailleurs la surface sur laquelle les actionneurs piézoélectriques 20, 21 appliquent une pression sur la platine 30 mobile, les moyens de contrôle permettent alors de contrôler en temps réel la pression réellement appliquée par chacun des actionneurs piézoélectriques 20, 21 sur la platine 30 mobile.

Cette pression se transmet alors aux enclumes par l'intermédiaire de la platine 30 mobile et, lorsqu'elle est prévue, de la première plaque 40. En contrôlant ainsi la pression appliquée par les actionneurs piézoélectriques 20, 21 sur la platine 30 mobile, on contrôle plus précisément la pression réellement appliquée entre les enclumes 2, 3 de la cellule. A cet effet, on comprend que la platine 30 (et, le cas échéant, la première plaque 40) est dimensionnée pour ne pas se déformer. Même si celle-ci se déforme légèrement, il s'agit d'une déformation élastique et, conformément à la loi de Hooke, la platine légèrement déformée joue le rôle d'un ressort. Ainsi, en utilisation, la platine déformée élastiquement tend à retrouver sa forme initiale et participe ainsi à la pression exercée entre les enclumes. L'énergie utilisée initialement pour déformer la platine est ainsi stockée dedans. En régime stationnaire, cette déformation n'a pas de conséquence sur le contrôle de la pression réellement appliquée entre les enclumes 2, 3 de la cellule, parce que la force est directement transmise.

De plus, un éventuel désalignement des enclumes 2, 3 l'une par rapport à l'autre peut être compensé en temps réel en appliquant une pression différente d'un actionneur piézoélectrique à l'autre. Ceci est envisageable lorsque plusieurs actionneurs piézoélectriques sont prévus et, de préférence, répartis uniformément sur la platine 30 mobile.

La détection de ce désalignement peut s'effectuer par un déséquilibre des données produites par les capteurs, en particulier par une différence entre les données produites d'une part par les capteurs de force 50, 51 et, d'autre part, par les capteurs d'élongation 60, 61.

En variante, la détection de ce désalignement peut s'effectuer par un microscope qui visualise l'échantillon.

Il est également envisageable d'utiliser à la fois les capteurs et un microscope pour détecter ce désalignement.

Bien entendu, ce désalignement ne peut être constaté que par rapport à une position de référence, dans laquelle les enclumes sont alignées. Cette position de référence est établie avant le commencement de toute expérience. Cela peut consister à disposer les enclumes de diamants l'une contre l'autre et utiliser les propriétés optiques du diamant pour s'assurer du parfait alignement des enclumes. Dans le cadre de l'invention, on effectue également une initialisation des actionneurs piézoélectriques.

La pression réellement appliquée entre les enclumes peut encore être améliorée en prenant en compte d'autres paramètres physiques dans la boucle 70 de régulation. Ces autres paramètres physiques forment alors autant de nouvelles entrées dans le régulateur 72.

En particulier, il peut être intéressant de prendre en compte la température mesurée au sein de l'échantillon, entre les enclumes. Cette température peut être mesurée par des thermocouples ou grâce à des capteurs insérés dans diamants fonctionnalisés

Il peut également être intéressant de prendre en compte les signaux provenant du ou de chaque élément inséré dans les enclumes 2, 3. Ces éléments peuvent notamment être un capteur de pression, des électrodes de mesure (ex. propriétés de transport), un élément de chauffage de type four résistif ou, comme mentionné précédemment un capteur de température.

La régulation PID est largement répandue et son adaptation à la cellule proposée par l'invention ne pose aucune difficulté particulière à l'homme du métier.

On peut cependant rappeler quelques principes applicables à la cellule proposée par l'invention.

### Cas des expériences à dynamique lente.

Les expériences à dynamique lente correspondent à des expériences pour lesquelles les générateurs de fonctions génèrent une fonction de fréquence inférieure à 0,1 Hz (période supérieure à 10s).

Ces expériences sont celles qui sont classiquement réalisées avec des cellules à enclumes de diamants, ou avec d'autres types d'enclumes.

Dans ce cas, les paramètres pour I (« Intégral ») et D (« Dérivé ») du régulateur PID sont très faibles par rapport au paramètre P (« Proportionnel).

On comprend que ces paramètres dépendent, dans le cadre de l'invention, de la force et de l'élongation fournies par les capteurs 50, 51, 60, 61. Cependant, ces paramètres ne dépendent pas ou quasiment pas de la fréquence, pour de basses fréquences.

### Cas des expériences à dynamique rapide.

Les expériences à dynamique rapide correspondent à des expériences pour lesquelles les générateurs de fonctions génèrent une fonction de fréquence supérieure à 0,5Hz (période inférieure à 2s).

Dans ce cas, les paramètres P, I et D ne dépendent pas seulement de l'élongation et de la force, mais aussi de la fréquence. Ces paramètres doivent alors être déterminés à chaque nouvelle expérience, compte tenu de la fréquence. Ceci s'effectue selon une procédure standard.

## Revendications

1. Cellule (1) à enclumes (2, 3), comprenant:
- un support (10) fixe en utilisation;
- une platine (30) mobile ;
- au moins un actionneur piézoélectrique (20, 21) présentant un axe d'actionnement, dont une extrémité est solidaire du support (10) et dont l'autre extrémité est solidaire d'une première face (31) de la platine (30) mobile, ladite platine (30) étant susceptible de se déplacer selon l'axe d'actionnement de l'actionneur (20, 21) sous l'action de ce dernier ;
- une première enclume (2) montée sur une deuxième face (32) de ladite platine (30), opposée à la première face (31) ; et
- une deuxième enclume (3), solidaire du support (10), montée en vis-à-vis de la première enclume (2).

2. Cellule (1) selon la revendication 1, dans laquelle :
- le support (10) fixe en utilisation comprend au moins deux platines fixes (103, 104), maintenues à distance l'une de l'autre;
- la platine (30) mobile est montée coulissante entre les platines fixes (103, 104) ;
- les actionneurs piézoélectriques (20, 21) sont montés sur une première platine fixe (104) et sur la platine (30) mobile ;
- les enclumes (2, 3) sont montées en regard l'une de l'autre, entre la platine (30) mobile et la deuxième platine fixe (103).

3. Cellule (1) selon l'une des revendications précédentes, dans laquelle il est prévu un capteur de force (50, 51), monté entre le ou chaque actionneur piézoélectrique (20, 21) et le support (10).

4. Cellule (1) selon l'une des revendications précédentes, dans laquelle au moins l'un des actionneurs piézoélectriques (20, 21) comprend un capteur d'élongation (60, 61).

5. Cellule (1) selon l'une des revendications précédentes, dans laquelle il est prévu plusieurs actionneurs piézoélectriques (20, 21), chaque actionneur (20, 21) comprenant une extrémité solidaire du support (10) et une autre extrémité solidaire d'une face (31) de ladite platine (30) mobile.

6. Cellule (1) selon la revendication précédente, dans laquelle, les enclumes (2, 3) présentant un axe d'alignement, les actionneurs piézoélectriques (20, 21) sont répartis uniformément autour de cet axe d'alignement.

7. Cellule (1) selon l'une des revendications précédentes, dans laquelle au moins l'une des enclumes (2, 3) comprend l'un au moins des éléments suivants : capteur de pression, capteur de température, électrodes de mesure, moyen de chauffage tel qu'un four résistif.

8. Dispositif comprenant une cellule (1) selon l'une des revendications 3 à 7 et des moyens pour contrôler la pression appliquée par le ou chaque actionneur piézoélectrique, à partir des données au moins issues du ou de chaque capteur de force.

9. Dispositif selon la revendication précédente, dans lequel les moyens pour contrôler la pression appliquée par le ou chaque actionneur piézoélectrique utilisent, en outre, les données issues du ou de chaque capteur d'élongation.

10. Dispositif selon l'une des revendications 8 ou 9, dans lequel les moyens pour contrôler la pression appliquée par le ou chaque actionneur comprennent un régulateur (72) de type Proportionnel Intégral Dérivé.

## Patentansprüche

1. Amboss (2, 3) - Zelle (1), die umfasst:
- eine im Einsatz feste Stütze (10);
- eine bewegliche Platte (30);
- wenigstens ein piezoelektrischer Aktor (20, 21) mit einer Betätigungsachse, dessen eines Ende mit der Stütze (10) fest verbunden ist und dessen weiteres Ende fest mit einer ersten Oberfläche (31) der beweglichen Platte (30) fest verbunden ist, wobei die Platte (30) dazu geeignet ist, sich entlang der Betätigungsachse des Aktors (20, 21) unter der Wirkung des letzteren zu verlagern;
- einen ersten Amboss (2), der auf einer zweiten Oberfläche (32) der Platte, gegenüber der ersten Oberfläche (31), befestigt ist; und
- einen zweiten Amboss (3), der, fest mit der Stütze (10) verbunden, gegenüber dem ersten Amboss (2) befestigt ist.

2. Zelle (1) nach Anspruch 1, in der:
- die im Einsatz feste Stütze (10) wenigstens zwei feste Platten (103, 104) umfasst, die in einem Abstand zueinander gehalten werden;
- die bewegliche Platte (30) gleitend zwischen den festen Platten (103, 104) befestigt ist;
- die piezoelektrischen Aktoren (20, 21) auf einer ersten festen Platte (104) und auf der beweglichen Platte (30) befestigt sind;
- die Ambosse (2, 3) einander gegenüber, zwischen der beweglichen Platte (30) und der zweiten festen Platte (103) befestigt sind.

3. Zelle (1) nach einem der vorherigen Ansprüche, in der ein Kraftsensor (50, 51) vorgesehen ist, der zwischen dem oder jedem piezoelektrischen Aktor (20, 21) und der Stütze (10) angeordnet ist.

4. Zelle (1) nach einem der vorherigen Ansprüche, in der wenigstens der einer der piezoelektrischen Aktoren (20, 21) einen Dehnungssensor (60, 61) umfasst.

5. Zelle (1) nach einem der vorherigen Ansprüche, in der mehrere piezoelektrische Aktoren (20, 21) vorgesehen sind, wobei jeder Aktor (20, 21) ein mit der Stütze (10) fest verbundenes Ende und ein mit einer Oberfläche (31) der beweglichen Platte (30) fest verbundenes weiteres Ende umfasst.

6. Zelle (1) nach einem der vorherigen Ansprüche, in der die piezoelektrischen Aktoren (20, 21) gleichmäßig um eine Ausrichtungsachse verteilt sind, die von den Ambossen (2, 3) gebildet ist.

7. Zelle (1) nach einem der vorherigen Ansprüche, in der wenigstens einer der Ambosse (2, 3) wenigstens eines der folgenden Elemente umfasst: Drucksensor, Temperatursensor, Messelektroden, Heizmittel wie etwa ein Widerstandsofen.

8. Zelle (1) nach einem der Ansprüche 3 bis 7 und Mittel zum Regeln des durch den oder jeden piezoelektrischen Aktor ausgeübten Drucks auf der Grundlage der von wenigstens einem oder jedem Kraftsensor ausgegebenen Daten.

9. Zelle (1) nach einem der vorherigen Ansprüche, in der die Mittel zum Regeln des durch den oder jeden piezoelektrischen Aktor ausgeübten Drucks unter anderem die von dem oder jedem Dehnungssensor ausgegebenen Daten verwendet.

10. Zelle (1) nach Anspruch 8 oder 9, in dem die Mittel zum Regeln des durch den oder jeden piezoelektrischen Aktor ausgeübten Drucks einen Regler (72) vom Typ eines Proportional-Integral-Diffierentialregler ist.

## Claims

1. Cell (1) with anvils (2, 3), comprising:
- a support (10) which is fixed in use;
- a movable plate (30);
- at least one piezoelectric actuator (20, 21) having an actuating axis, one end of which is fixedly attached to the support (10) and the other end of which is fixedly attached to a first side (31) of the movable plate (30), said plate (30) being capable of moving along the actuating axis of the actuator (20, 21) under the effect of the latter;
- a first anvil (2), mounted on a second side (32) of said plate (30), opposite the first side (31); and
- a second anvil (3), fixedly attached to the support (10), mounted facing the first anvil (2).

2. Cell (1) according to claim 1, wherein:
- the support (10) which is fixed in use comprises at least two fixed plates (103, 104) held at a spacing from one another;
- the movable plate (30) is mounted so as to slide between the fixed plates (103, 104);
- the piezoelectric actuators (20, 21) are mounted on a first fixed plate (104) and on the movable plate (30);
- the anvils (2, 3) are mounted opposite each other, between the movable plate (30) and the second fixed plate (103).

3. Cell (1) according to one of the preceding claims, wherein a force detector (50, 51) is provided, mounted between the or each piezoelectric actuator (20, 21) and the support (10).

4. Cell (1) according to one of the preceding claims, wherein at least one of the piezoelectric actuators (20, 21) comprises an elongation sensor (60, 61).

5. Cell (1) according to one of the preceding claims, wherein a plurality of piezoelectric actuators (20, 21) are provided, each actuator (20, 21) comprising one end which is fixedly attached to the support (10) and another end which is fixedly attached to a side (31) of said movable plate (30).

6. Cell (1) according to the preceding claim, wherein, with the anvils (2, 3) having an axis of alignment, the piezoelectric actuators (20, 21) are distributed uniformly about said axis of alignment.

7. Cell (1) according to one of the preceding claims, wherein at least one of the anvils (2, 3) comprises at least one of the following elements: a pressure sensor, a temperature sensor, measuring electrodes, and heating means such as a resistance furnace.

8. Apparatus comprising a cell (1) according to one of claims 3 to 7 and means for controlling the pressure applied by the or each piezoelectric actuator on the basis of at least the data from the or each force detector.

9. Apparatus according to the preceding claim, wherein the means for controlling the pressure applied by the or each piezoelectric actuator also use the data from the or each elongation sensor.

10. Apparatus according to one of claims 8 or 9, wherein the means for controlling the pressure applied by the or each actuator comprise a regulator (72) of the Proportional Integral Derivative type.
